# EUROPÄISCHE PATENTANMELDUNG

(11) **EP 2 368 838 A1**
(43) Veröffentlichungstag der Anmeldung: **28.09.2011**
(21) Anmeldenummer: 10015486.3
(22) Anmeldetag: 31.08.2005
(51) Int. Cl.: B82B 1/00, C23C 18/12, C23C 20/08, C23C 22/74

(54) **Beschichtetes metallisches Bauteil**

(30) Priorität: 05.10.2004 EP 04023702
(62) Teilanmeldung aus: 05779209.5
(71) Anmelder: SIEMENS AKTIENGESELLSCHAFT, 80333 München (DE)
(72) Erfinder: Jabado, Rene, 14199 Berlin (DE); Krüger, Ursus, Dr., 14089 Berlin (DE); Körtvelyessy, Daniel, 13469 Berlin (DE); Reiche, Ralph, 13465 Berlin (DE); Rindler, Michael, 15566 Schöneiche (DE); Steinbach, Jan, Dr., 13353 Berlin (DE); Ullrich, Raymond, 14621 Schönwalde (DE)

(57) **Zusammenfassung**

Eine erfindungsgemäße Materialzusammensetzung für das Herstellen einer Beschichtung (5) für ein Bauteil (1), insbesondere für ein Turbinenbauteil, welches aus einem metallischen Basismaterial (3), d.h. aus einem Metall oder einer Metalllegierung, hergestellt ist, umfasst ein Matrixmaterial zum Bilden einer Grundmatrix der Beschichtung und mindestens ein Füllmaterial zum Einstellen gewünschter Beschichtungseigenschaften bzw. Beschichtungsmerkmale. Das Matrixmaterial kann insbesondere glaskeramische Grundeigenschaften aufweisen. Die erfindungsgemäße Materialzusammensetzung zeichnet sich dadurch aus, dass das Matrixmaterial und/oder das Füllmaterial Nanopartikel mit Partikelgrößen kleiner als 1 µm umfasst bzw. umfassen.

## Beschreibung

Die Erfindung umfasst ein beschichtetes metallisches Bauteil. Die Erfindung eignet sich bspw. für den Einsatz in Gasturbinenanlagen, insbesondere für den Einsatz in Verdichtern von Gasturbinenanlagen.

Eine Gasturbinenanlage umfasst ein im einfachsten Fall einen Verdichter, eine Brennkammer sowie eine Turbine. Im Verdichter erfolgt ein Verdichten von angesaugter Luft, welcher anschließend Brennstoff beigemischt wird. In der Brennkammer erfolgt dann eine Verbrennung dieses Gemisches, wobei die Verbrennungsabgase der Turbine zugeführt werden von der ihnen thermische Energie entzogen und in mechanische Energie umgesetzt wird. Der Verdichter wird in der Regel von der Turbine angetrieben und umfasst eine Vielzahl von Verdichterschaufeln.

Beim Verdichten der Luft im Verdichter kann Wasser ausfallen, das unter Umständen in Verbindung mit anderen in der Luft enthaltenen Elementen ein Elektrolyt bildet, welches zu Korrosion und Erosion an den Verdichterschaufeln führen kann. Um die Korrosion und/oder Erosion zu verhindern, werden Verdichterschaufeln daher in der Regel mit Beschichtungen versehen. Hierbei kommen insbesondere Beschichtungen in Betracht, die eine beispielsweise phosphatgebundene Grundmatrix mit darin dispersiv verteilten Metallpartikeln wie etwa Aluminiumpartikel umfassen. Die Schutzwirkung einer derartigen Beschichtung besteht darin, dass die in der Grundbeschichtung eingebetteten Metallpartikel zusammen mit dem (edleren) Metall der Verdichterschaufel und dem Elektrolyt eine galvanische Zelle bilden, in welcher die Metallpartikel sog. Opfer-Anoden bilden. Die Oxidation bzw. die Korrosion findet dann in den Opfer-Anoden statt, d.h. in den Metallpartikeln und nicht im Metall der Verdichterschaufel.

Die phosphatgebundene Grundmatrix hat glaskeramische Eigenschaften, ist thermisch stabil, ebenfalls korrosionsbeständig und schützt gegen mechanische Einwirkungen, etwa Abrasion und Erosion.

Neben den Metallpartikeln kann die Beschichtung weitere Partikel als Füllstoffe enthalten. Beispielhaft seien an dieser Stelle Farbstoffpartikel genannt.

Neben phosphatgebundenen Beschichtungen kommen weitere Arten von Beschichtungen in Betracht. Die EP 0 142 418 B1, die EP 0 905 279 A1 und die EP 0 995 816 A1 beschreiben Beschichtungen auf Chromat/Phosphat-Basis. Die EP 1 096 040 A2 beschreibt eine Beschichtung auf Phosphat/Borat-Basis und die EP 0 933 446 B1 beschreibt eine Beschichtung auf Phosphat/Permanganat-Basis. In den beschriebenen Beschichtungen werden Partikelzusätze mit Partikelgrößen von >1 µm verwendet. Die Beschichtungen weisen daher Schichtstrukturen mit Korngrößen über 1 µm auf. Um eine glatte Außenfläche der Schaufeln zu erhalten, wird über einer derartigen Grundierungsschicht- der sog. "base coat" - daher noch eine besonders glatte Deckbeschichtung - die sog. "top coat" - aufgebracht.

Aufgabe der vorliegenden Erfindung ist es, ein vorteilhaftes beschichtetes metallisches Bauteil, insbesondere ein Turbinenbauteil und weiter insbesondere eine Verdichterschaufel oder eine Turbinenschaufel, zur Verfügung zu stellen.

Die erste Aufgabe wird gelöst durch ein beschichtetes Bauteil nach Anspruch 18. Die abhängigen Ansprüche enthalten vorteilhafte Ausgestaltungen der Erfindung und können beliebig miteinander kombiniert werden.

Eine Materialzusammensetzung für das Herstellen einer Beschichtung für ein Bauteil, insbesondere für ein Turbinenbauteil, welches aus einem metallischen Basismaterial, d.h. aus einem Metall oder einer Metalllegierung, hergestellt ist, umfasst ein Matrixmaterial zum Bilden einer Grundmatrix der Beschichtung und mindestens ein Füllmaterial zum Einstellen gewünschter Beschichtungseigenschaften bzw. Beschichtungsmerkmale. Das Matrixmaterial kann insbesondere glaskeramische Grundeigenschaften aufweisen. Die erfindungsgemäße Materialzusammensetzung zeichnet sich dadurch aus, dass das Matrixmaterial und/oder das Füllmaterial Nanopartikel mit Partikelgrößen kleiner als 1 µm umfasst bzw. umfassen. Vorzugsweise liegen die Partikelgrößen der Nanopartikel im Bereich von 50 µm bis 200 µm.

Das Verwenden von Nanopartikeln dient u.a. dazu, ein ultrafeines Schichtgefüge einzustellen. Dadurch lassen sich korngrößenabhängige Eigenschaften, beispielsweise Bruchzähigkeiten, Festigkeit, Thermoschockbeständigkeit, etc., des Schichtgefüges verbessern. Materialien mit einer Korngröße im Nanometerbereich besitzen bedingt durch ihre große Oberflächenenergie eine außerordentlich hohe Sinteraktivität. Die erhöhte Anzahl von Grenzflächenatomen und die kurzen Diffusionswege in den Nanopartikeln führen dazu, dass bereits eine Temperatur, die um ca. 20% bis 40% niedriger als die Schmelztemperatur des Volumenmaterials ist, ein Sintern der Materialzusammensetzung möglich ist. Dies wirkt sich wiederum positiv auf das Kornwachstum im Material aus.

Außerdem zeigt sich, dass nanostrukturierte Materialien als Korrosionsschutz beständiger sind, wenn sie korrosiven Medien ausgesetzt werden, als die grobkörnigen Beschichtungen nach Stand der Technik. Der verbesserte Korrosionsschutz bei Metallen wird mit der Präsenz einer größeren Anzahl von gleichmäßig fein verteilten Defektstellen im Passivfilm, welche primär an den Korngrenzen lokalisiert sind, begründet. Die ultrafeine Verteilung der Defektstellen verhindert eine hohe lokale Anreicherung von schädlichen Anionen (beispielsweise Chlorid, Sulfat, etc.). Im Ergebnis ist eine größere Triebkraft für die Anionenanreicherung und die nachfolgende Ansäuerung nötig, wodurch ein höheres anodisches Potential für stabiles Lochwachstum notwendig ist.

Auch in anderen Eigenschaften weist die Materialzusammensetzung mit Nanopartikeln starke Abweichungen von grobkörnigen Materialzusammensetzungen, d.h. mit Partikelgrößen über 1 µm, auf. So ist etwa die typische Härte von Metall mit Partikelgrößen von ca. 10 µm im Vergleich zum selben Metall mit Partikelgrößen von ca. 1 µm um einen Faktor 2 bis 7 höher. Zudem tritt das Hart-Weich-Phänomen von nanostrukturierten Materialien auf: Hartes Material wird duktiler, weiches Material wird härter. Aufgrund dieses Hart-Weich-Phänomens lassen sich mit der erfindungsgemäßen Materialzusammensetzung Beschichtungen mit verringerter Sprödigkeit realisieren.

In einer Ausgestaltung der Erfindung sind feste Bestandteile des Matrixmaterials als Nanopartikel ausgebildet. Die Ausbildung der festen Bestandteile des Matrixmaterials als Nanopartikel erhöht die thermische Stabilität, die Korrosionsbeständigkeit, sowie die Beständigkeit gegen mechanische Einwirkungen einer aus der Materialzusammensetzung hergestellten Beschichtung. Zudem ermöglicht das Verwenden von Nanopartikeln im Matrixmaterial insbesondere im Zusammenwirken mit der Verwendung von Nanopartikeln im Füllmaterial, glattere Beschichtungen als mit den grobkörnigen Materialzusammensetzungen nach Stand der Technik herzustellen. Eine Deckbeschichtung (top coat) ist dann nicht mehr nötig. Durch den Wegfall der Verfahrensschritte für das Herstellen der Deckbeschichtung lassen sich Kosten- und Zeitaufwand für das Beschichten eines Bauteiles reduzieren.

Als Nanopartikel für das Matrixmaterial kommen insbesondere - aber nicht ausschließlich - Aluminium (Al), Chromtrioxid (CrO₃), Magnesiumoxid (MgO), Aluminiumoxid (Al₂O₃) und/oder Borsäure (H₃BO₃) umfassende Materialien in Frage.

In einer weiteren Ausgestaltung der vorliegenden Erfindung umfasst das Füllmaterial Metall- oder Metalllegierungspartikel als Nanopartikel. Diese können im Hinblick auf das metallische Basismaterial derart gewählt sein, dass sie eine Opferanodenwirkung zur Verfügung stellen. Mit anderen Worten, das Metall bzw. die Metalllegierung der Nanopartikel kann weniger edel als das Metall bzw. die Metalllegierung des metallischen Basismaterials sein.

Je nach metallischen Basismaterial können die Metall- oder die Metalllegierungspartikel mindestens eines der folgenden Metalle umfassen: Aluminium (Al), Magnesium (Mg), Eisen (Fe), Nickel (Ni), Kobalt (Co), Titan (Ti) und Zink (Zn). Die genannten Metalle eignen sich insbesondere für das Beschichten von Schaufeln, welche aus einer Superlegierung auf Eisen-, Nickel- oder Kobaltbasis hergestellt sind. Derartige Legierungen umfassen typischerweise Chrom, Titan, Tantal, Aluminium, Wolfram und weitere Elemente mit ausgezeichneter Resistenz gegen hohe Temperaturen und gleichzeitig hoher Festigkeit. Auf Eisen basierende Basislegierungen kommen insbesondere zum Herstellen von Verdichterschaufeln zur Anwendung, wohingegen auf Nickel oder Kobalt basierende Basislegierungen insbesondere zum Herstellen der Turbinenschaufeln Verwendung finden. Ein Beispiel für eine aus einer Superlegierung hergestellte Gasturbinenschaufel ist der US 5,611,670 zu entnehmen. Auf die Offenbarung dieser Druckschrift wird daher bezüglich der Zusammensetzung möglicher Superlegierungen für Turbinenschaufeln explizit Bezug genommen.

Da die Metall- bzw. Metalllegierungspartikel aufgrund ihrer geringen Größe eine besonders hohe Reaktivität aufweisen, ist es vorteilhaft, wenn sie desaktiviert sind. Das Desaktivieren kann beispielsweise dadurch realisiert sein, dass die Metall- oder Metalllegierungspartikel eine Oxidschicht, eine Phosphatschicht oder eine zum Matrixmaterial und/oder weiteren Füllstoffen kompatible Desaktivierungsschicht, beispielsweise Chromat, Borat, etc., umfassen. Die Desaktivierungsschicht kann in Situ bei der Herstellung der Nanopartikel erzeugt werden. Dies kann beispielsweise durch kontrollierte Zugabe von Precursor-Verbindungen oder -Gasen erfolgen. Das Desaktivieren von metallischen Nanopartikeln ist beispielsweise in US 2003/0108459 A1 und in WO 01/58625 A1 beschrieben. Auf die Offenbarung dieser Druckschriften wird daher bezüglich des Desaktivierens der Metall- bzw. Metalllegierungspartikel Bezug genommen.

In einer weiteren Ausgestaltung der vorliegenden Erfindung umfasst das Füllmaterial Hartstoffpartikel als Nanopartikel. Die Hartstoffpartikel können insbesondere mindestens eines der folgenden Materialien umfassen: Diamant, Siliziumcarbid (SiC), kubisches Bornitrid (BN), Korund, etc. umfassen. Mittels der nanoskaligen Hartstoffpartikel kann die Beständigkeit einer mittels der erfindungsgemäßen Materialzusammensetzung hergestellten Beschichtung gegenüber mechanischen Einwirkungen erhöht werden.

In noch einer weiteren Ausgestaltung der vorliegenden Erfindung umfasst das Füllmaterial temperaturbeständige Partikel als Nanopartikel. Als temperaturbeständige Nanopartikel kommen insbesondere Zirkonoxid (ZrO₂), Siliziumoxid (SiO₂), Aluminiumoxid (Al₂O₃), Aluminium-Silizium-Oxid(AlₓSi_{y})O_{z}, etc. in Frage. Mittels der nanoskaligen temperaturbeständigen Partikel kann die Temperaturbelastbarkeit einer mittels der erfindungsgemäßen Materialzusammensetzung hergestellten Beschichtung erhöht werden.

Außerdem kann in einer weiteren Ausgestaltung der erfindungsgemäßen Materialzusammensetzung das Füllmaterial Trockenschmierstoffe als Nanopartikel umfassen. Geeignete Trockenschmierstoffe sind beispielsweise Graphit, Molybdänsulfid MoS₂, Wolframsulfid WS₂, ZrOₓN_{y}, etc. Mittels der Trockenschmierstoffe lässt sich die Verschleißfestigkeit einer mittels der erfindungsgemäßen Materialzusammensetzung hergestellten Beschichtung erhöhen.

Schließlich kann das Füllmaterial in noch einer weiteren Ausgestaltung der erfindungsgemäßen Materialzusammensetzung Farbpigmente mindestens einer Pigmentsorte als Nanopartikel umfassen. Mittels der Farbpigmente lässt sich eine dekorative oder informative Farbgebung eines beschichteten Bauteils realisieren. Die Farbpigmente können darüber hinaus zur Verbesserung des Korrosionsschutzes, der Temperaturbeständigkeit und der Verschleißfestigkeit des beschichteten Bauteils beitragen.

Das Füllmaterial kann auch eine Mischung verschiedener Pigmentsorten als Nanopartikel umfassen, so dass sich eine Vielzahl möglicher Farben realisieren lässt.

In einer besonderen Ausgestaltung des beschichteten Bauteils weist seine Beschichtung mindestens zwei Lagen auf, welche verschiedene nanoskalige Pigmentsorten beinhalten. So kann beispielsweise bei Wartungs- oder Reparaturarbeiten an dem Bauteil anhand der Farbe erkannt werden, ob die oberste Lage der Beschichtung noch vorhanden ist oder nicht. Dies ermöglicht ein Erkennen, in wieweit die Beschichtung noch Schutz gewährleistet und erspart daher unnötige Neubeschichtungen.

Das erfindungsgemäße beschichtete metallische Bauteil kann bspw. als Bauteil einer Turbinenanlage, insbesondere als Verdichterschaufel oder als Turbinenschaufel, ausgestaltet sein.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
Fig. 1 zeigt einen Ausschnitt aus einer beschichteten Verdichterschaufel in einer schematischen Darstellung.
Fig. 2 zeigt einen Ausschnitt aus einer beschichteten Verdichterschaufel in einer schematischen Darstellung.
Fig. 3 zeigt beispielhaft eine Gasturbine in einem Längsteilschnitt.
Fig. 4 zeigt in perspektivischer Ansicht eine Laufschaufel oder Leitschaufel einer Strömungsmaschine.

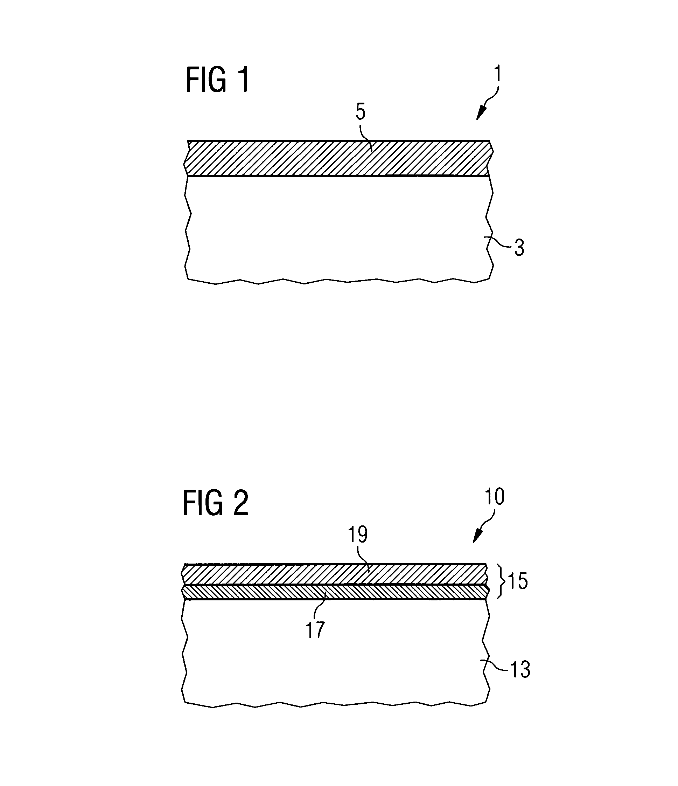

In Figur 1 ist schematisch ein Ausschnitt aus einer Verdichterschaufel 1, wie sie in einem Verdichter einer Gasturbinenanlage Verwendung finden, dargestellt. Es sind das Basismaterial 3 sowie eine auf das Basismaterial 3 aufgebrachte Beschichtung 5 zu erkennen.

Das Basismaterial 3 der Verdichterschaufel 1 kann beispielsweise aus einer Superlegierung hergestellt sein. Superlegierungen sind Legierungen auf Eisen-, Nickel- oder Kobalt-Basis, welche typischerweise Chrom, Titan, Tantal, Aluminium, Wolfram und weitere Elemente mit ausgezeichneter Resistenz gegen hohe Temperaturen und gleichzeitig hoher Festigkeit umfassen können. Ein Beispiel für eine aus einer Superlegierung hergestellte Gasturbinenschaufel ist beispielsweise der US 5,611,670 zu entnehmen. Bezüglich der Zusammensetzung geeigneter Superlegierungen wird daher auf diese Druckschrift Bezug genommen. Im vorliegenden Ausführungsbeispiel ist dass Basismaterial eine Legierung auf Eisenbasis.

Die Beschichtung 5 ist eine anorganische Beschichtung zum Korrosions- und Verschleißschutz der Verdichterschaufel 1. Sie umfasst einen anorganischen Binder aus Chromat/Phosphat-Verbindungen und im Binder dispersiv verteilte Metallpartikel, beispielsweise sphärische Aluminiumteilchen, als Pigment.

Das Beschichten kann beispielsweise durch Aufsprühen der folgenden Materialzusammensetzung erfolgen: 7 gew% Chromtrioxid (CrO₃), 25 gew% Phosphorsäure (H₃PO₄), 6 gew% Magnesiumoxid (MgO) und 62 gew% Wasser (H₂O) als Binder und Aluminiumteilchen mit einem mittleren Durchmesser im Bereich von 90 bis 110 µm als Pigment. Die Herstellung derartiger Aluminiumteilchen ist beispielsweise in WO 01/58625 A1 beschrieben. Auf die Offenbarung dieser Druckschrift wird daher bezüglich des Herstellens der nanoskaligen Aluminiumteilchen Bezug genommen. Die Zusammensetzung des Binders sowie weiterer geeigneter Binder auf Chromat/Phosphat-Basis sind im EP 0 142 418 B1 beschrieben. Weitere mögliche Beschichtungszusammensetzungen auf Chromat/Phosphat-Basis sind darüber hinaus in EP 0 905 279 A1 und in EP 0 995 816 A1 beschrieben. Auf die genannten Druckschriften wird daher bezüglich der chem. Zusammensetzung von Beschichtungen auf Chromat/Phosphat-Basis Bezug genommen. Im Unterschied zu den darin genannten Beschichtungszusammensetzungen ist in der mit Bezug auf Figur 1 beschriebenen erfindungsgemäßen Beschichtungszusammensetzung das Pigment jedoch in Form nanoskaliger Partikel realisiert. In den genannten Druckschriften liegen die Durchmesser der Füllpartikel dagegen im µm-Bereich.

Die beigefügten nanoskaligen Metallpartikel oder Metalllegierungspartikel dienen insbesondere als Opferanoden der Beschichtung. Das Metall sollte daher im Hinblick auf die Zusammensetzung des Basismaterials so gewählt werden, dass es weniger edel als die Basislegierung ist, um die Opferanodenwirkung sicherzustellen.

Nachdem die beschriebene Beschichtungszusammensetzung auf das Basismaterial 3 der Verdichterschaufel 1 aufgesprüht worden ist, lässt man die Zusammensetzung austrocknen, so dass der Binder dann die Schichtmatrix bildet, in welche die nanoskaligen Aluminiumteilchen eingebettet sind.

In einer Abwandlung des beschriebenen Ausführungsbeispiels können statt der Aluminiumpartikel oder zusätzlich zu den Aluminiumpartikeln auch die festen Bestandteile des Binders, also im vorliegenden Ausführungsbeispiel beispielsweise das Chromtrioxid sowie das Magnesiumoxid in Form von nanoskaligen Partikeln vorliegen.

Allgemein dient das Verwenden von nanoskaligen Partikeln dazu, ein ultrafeines Schichtgefüge einzustellen. Dadurch lassen sich besonders glatte Beschichtungen herstellen, so dass im in Figur 1 dargestellten Ausführungsbeispiel eine Top-coat-Beschichtung nicht nötig ist.

Der beschriebenen Beschichtung können statt der nanoskaligen Pigmente und/oder Aluminiumpartikel oder zusätzlich zu diesen auch nanoskalige Hartstoffpartikel, beispielsweise Diamant, Siliziumcarbid (SiC), etc. beigemischt werden, um die Beständigkeit gegenüber mechanischen Einwirkungen, etwa Abrasion oder Erosion, zu erhöhen. Ebenso ist es möglich temperaturresistente nanoskalige Verbindungen wie etwa Zirkonoxid (ZrO₂), Siliziumoxid (SiO₂) etc. beizufügen, um die Temperaturbelastbarkeit der Beschichtung zu erhöhen. Schließlich können nanoskalige Trockenschmierstoffe, etwa Graphit, Molybdänsulfid (MoS₂), etc. zugesetzt werden, um die Verschleißfestigkeit der Beschichtung einzustellen.

Figur 2 zeigt als ein zweites Ausführungsbeispiel für die vorliegende Erfindung einen Ausschnitt aus einer beschichteten Verdichterschaufel 10. Es sind das Basismaterial 13, welches wie das Basismaterial 3 des ersten Ausführungsbeispiels aufgebaut sein kann, sowie eine auf das Basismaterial 13 aufgebrachte Beschichtung 15 dargestellt. Die Beschichtung umfasst im zweiten Ausführungsbeispiel eine erste Lage 17 und eine über der ersten Lage 17 aufgebrachte zweite Lage 19. Sowohl die erste Lage 17, als auch die zweite Lage 19 der Beschichtung 15 entsprechen in ihrer chemischen Zusammensetzung der Beschichtung 5 des ersten Ausführungsbeispiels.

Im Unterschied zur Beschichtung 5 des ersten Ausführungsbeispiels sind der Beschichtung 15 des zweiten Ausführungsbeispiels zusätzlich geeignete Farbpigmente in Form nanoskaliger Farbpigmentpartikel beigemischt. Farbpigmente sind beispielsweise in EP 0 905 279 A1 beschrieben, bzw. als sog. "colour index"-Farbpigmente (The Society of Dyers and Colourists) bekannt. Die gewünschte Farbgebung der Beschichtung, die durch das Beimischen der Farbpigmente erzielt werden soll, kann durch Mischung verschiedener Farbpigmentsorten erzielt werden. Im Unterschied zu den bekannten Farbpigmenten werden die Farbpigmente in der erfindungsgemäßen Materialzusammensetzung als nanoskalige Partikel beigemischt.

Im vorliegenden Ausführungsbeispiel ist der ersten Schicht 17 der Beschichtung 5 eine andere Farbpigmentsorte beigemischt, als der zweiten Schicht 19. Auf diese Weise kann beim Inspizieren eines bereits im Betrieb befindlichen Schaufelblattes anhand der Farbe der Abnutzungsgrad der Beschichtung festgestellt werden. Sobald die zweite Schicht 19 abgetragen ist, ändert sich die Farbe der Beschichtung. Dadurch kann beispielsweise die Notwendigkeit einer Wiederaufarbeitung der Verdichterschaufel angezeigt werden. Selbstverständlich sind auch mehr als zwei unterschiedlich gefärbte Lagen möglich.

Die bisher beschriebenen Beschichtungszusammensetzungen enthielten Binder auf Chromat/Phosphat-Basis. Alternative Beschichtungszusammensetzungen können jedoch auch Binder auf Phosphat/Borat-Basis oder Phosphat/Permanganat-Basis umfassen.

Ein geeigneter Binder auf Phosphat/Borat-Basis kann beispielsweise die folgenden Bestandteile aufweisen: Wasser, Phosphorsäure, Boroxid, Zinkoxid und Aluminiumhydroxid. Auch in einem derartigen Binder können die festen Bestandteile als nanoskalige Partikel ausgebildet sein. Dem Binder können wiederum Nanopartikel, bspw. Aluminiumpartikel oder andere Metallpartikel mit nanoskaligen Abmessungen, d.h. mit Abmessungen unter 1 µm, vorzugsweise zwischen 50 nm und 200 nm, insbesondere zwischen 90 nm und 110 nm, beigemischt werden. Alternativ oder zusätzlich ist es möglich, die bereits weiter oben genannten nanoskaligen Hartstoffpartikel und/oder die genannten temperaturresistenten Partikel und/oder die genannten Trockenschmierstoffe und/oder die genannten nanoskaligen Farbpigmente beizufügen. Geeignete Zusammensetzungen von Bindern auf Phosphat/Borat-Basis sind bspw. in EP 1 096 040 A2 beschrieben. Auf die Offenbarung dieser Druckschrift wird daher bezüglich der Zusammensetzung möglicher Binder für die erfindungsgemäße Beschichtungszusammensetzung Bezug genommen.

Ein geeigneter Binder auf Phosphat/Permanganat-Basis kann beispielsweise die folgenden Bestandteile umfassen: 67 gew% Wasser, 2 gew% Magnesiumpermanganat, 23 gew% 85%ige Phosphorsäure und 8 gew% Aluminiumhydroxid. Wie in den übrigen beschriebenen Beschichtungen können die festen Bestandteile der Binderzusammensetzung in Form nanoskaliger Partikel vorliegen. Zudem können alle mit Bezug auf die anderen Ausführungsbeispiele genannten Zusätze in Form nanoskaliger Partikel hinzugefügt werden. Weitere mögliche chemische Zusammensetzungen für Beschichtungen auf Phosphat/Permanganat-Basis sind in EP 0 933 446 B1 beschrieben. Auf die Offenbarung dieser Druckschrift wird daher bezüglich geeigneter chemischer Zusammensetzungen möglicher Binder für die erfindungsgemäße Beschichtungszusammensetzung Bezug genommen.

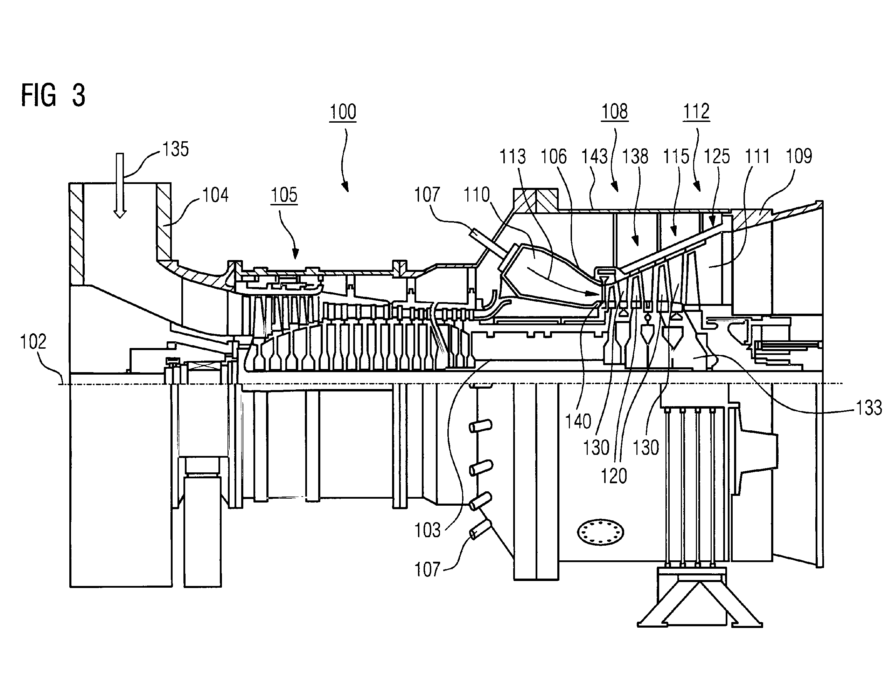

In den Ausführungsbeispielen sind die Feststoffe der Binder als nanoskalige Partikel ausgeführt. Es ist jedoch möglich, die Feststoffe des Binders nicht als nanoskalige Partikel auszuführen. In diesem Fall sind einer oder mehrere der genannten Zusatzstoffe vorhanden wobei mindestens einer der Zusatzstoffe in Form nanoskaliger Partikel realisiert ist. Die Figur 3 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1204776 B1, EP 1306454, EP 1319729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

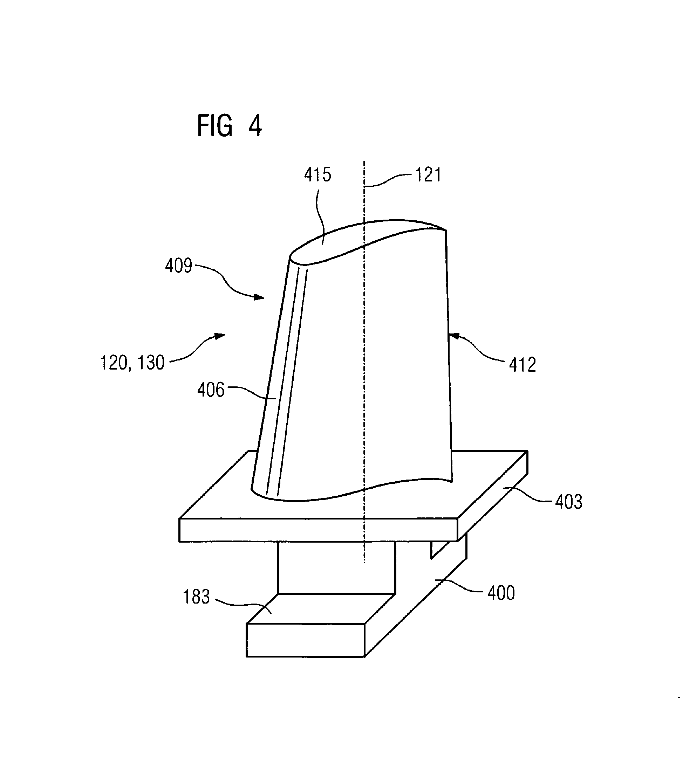

Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1204776 B1, EP 1306454, EP 1319729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

## Patentansprüche

1. Beschichtetes metallische Bauteil (1, 10) mit einer Materialzusammensetzung,
insbesondere für ein Turbinenbauteil (120, 130), welches (1, 10) aus einem metallischen Basismaterial (3,13) hergestellt ist,
wobei die Materialzusammensetzung umfasst:
- ein Matrixmaterial, insbesondere mit glaskeramischen Grundeigenschaften, zum Bilden einer Grundmatrix der Beschichtung (5,15), und
- mindestens ein Füllmaterial zum Einstellen gewünschter Beschichtungseigenschaften bzw. Beschichtungsmerkmale;
**dadurch gekennzeichnet,**
**dass** das Matrixmaterial und/oder das Füllmaterial Nanopartikel mit Partikelgrößen kleiner als 1µm umfasst bzw. umfassen,
**dass** das Füllmaterial Farbpigmente mindestens einer Pigmentsorte als Nanopartikel umfasst,
das Füllmaterial eine Mischung verschiedener Pigmentsorten als Nanopartikel umfasst und
**dass** die Beschichtung (15) mindestens zwei Lagen (17, 19) umfasst, welche verschiedene Pigmentsorten enthalten.

2. Bauteil nach Anspruch 1,
**dadurch gekennzeichnet, dass**
die Partikelgrößen der Nanopartikel im Bereich von 50 nm bis 200 nm liegen.

3. Bauteil nach Anspruch 1 oder 2,
**dadurch gekennzeichnet, dass**
feste Bestandteile des Matrixmaterials als Nanopartikel ausgebildet sind.

4. Bauteil nach Anspruch 3,
**dadurch gekennzeichnet, dass**
die Nanopartikel mindestens eines der folgenden Materialien umfassen: Al, CrO₃, MgO, Al₂O₃, H₃BO₃.

5. Bauteil nach einem der Ansprüche 1 bis 4,
**dadurch gekennzeichnet, dass**
das Füllmaterial Metall- oder Metalllegierungspartikel als Nanopartikel umfasst.

6. Bauteil nach Anspruch 6,
**dadurch gekennzeichnet, dass**
das Metall bzw. die Metalllegierung der Metalllegierungspartikel derart gewählt ist, dass diese eine Opferanodenwirkung realisieren.

7. Bauteil nach Anspruch 5 oder 6,
**dadurch gekennzeichnet, dass**
die Metall- oder Metalllegierungspartikel mindestens eines der folgenden Metalle umfassen: Al, Mg, Fe, Ni, Co, Ti, Zn.

8. Bauteil nach einem der Ansprüche 5 bis 7,
**dadurch gekennzeichnet, dass**
die Metall- oder Metalllegierungspartikel desaktiviert sind.

9. Bauteil nach Anspruch 8,
**dadurch gekennzeichnet, dass**
die Metall- oder Metalllegierungspartikel zur Desaktivierung eine Oxidschicht, eine Phosphatschicht oder eine zur Grundmatrix und/oder weiteren Füllstoffen kompatible Desaktivierungsschicht umfassen.

10. Bauteil nach einem der vorangehenden Ansprüche,
**dadurch gekennzeichnet, dass**
das Füllmaterial Hartstoffpartikel als Nanopartikel umfasst.

11. Bauteil nach Anspruch 10,
**dadurch gekennzeichnet, dass**
die Hartstoffpartikel mindestens eines der folgenden Materialien umfassen: Diamant, Siliziumcarbid, kubisches Bornitrid, Korund.

12. Bauteil nach einem der vorangehenden Ansprüche,
**dadurch gekennzeichnet,**
**dass** das Füllmaterial temperaturbeständige Partikel als Nanopartikel umfasst.

13. Bauteil nach Anspruch 12,
**dadurch gekennzeichnet, dass**
die temperaturbeständigen Partikel mindestens eines der folgenden Materialien umfassen: ZrO₂, SiO₂, Al₂O₃, (AlₓSi_{y})O_{z}.

14. Bauteil nach einem der vorangehenden Ansprüche,
**dadurch gekennzeichnet,**
**dass** das Füllmaterial Trockenschmierstoffe als Nanopartikel umfasst.

15. Bauteil nach Anspruch 14,
**dadurch gekennzeichnet, dass**
die Trockenschmierstoffe mindestens eines der folgenden Materialien umfassen: Graphit, MoS₂, WS₂, ZrOₓN_{y}.

16. Bauteil (1,10) nach Anspruch 1,
**gekennzeichnet durch** seine Ausgestaltung als Bauteil einer Turbinenanlage, insbesondere als Verdichterschaufel oder als Turbinenschaufel.
